(19) Europäisches Patentamt / European Patent Office / Office européen des brevets

(11) **EP 1 788 058 B1**

(12) **EUROPEAN PATENT SPECIFICATION**

(45) Date of publication and mention
of the grant of the patent:
**09.01.2019 Bulletin 2019/02**

(51) Int Cl.:
***C09J 153/02*** (2006.01)  ***C09J 153/00*** (2006.01)
***A61L 15/58*** (2006.01)  ***C08F 297/04*** (2006.01)

(21) Application number: **06023233.7**

(22) Date of filing: **08.11.2006**

(54) **ADHESIVE CONTAINING BLOCK COPOLYMERS**

KLEBSTOFF, DER BLOCKCOPOLYMERE ENTHÄLT

ADHÉSIF CONTENANT COPOLYMÈRES À BLOCS

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.11.2005 US 284102**

(43) Date of publication of application:
**23.05.2007 Bulletin 2007/21**

(73) Proprietor: **Henkel AG & Co. KGaA 40589 Düsseldorf (DE)**

(72) Inventors:
• **Qiwei, He**
**Belle Mead,**
**New Jersey 08502 (US)**
• **Harwell, Michael G.**
**Hillsborough,**
**New Jersey 08844 (US)**

(56) References cited:
**EP-A- 1 312 384**  **EP-A- 1 331 258**
**EP-A- 1 449 898**  **EP-A- 1 564 274**
**EP-A- 1 564 275**  **EP-A- 1 566 423**
**WO-A-01/00255**  **WO-A-01/00257**
**WO-A-2004/074394**  **WO-A2-02/057386**

**Description**

FIELD OF THE INVENTION

The invention relates to adhesive compositions, more specifically to hot melt adhesives that are particularly well suited for use as an elastic attachment adhesive or for use with stretchable materials. The adhesives comprise a polystyrene-(polyisoprene-co-butadiene)-polystyrene block copolymer.

BACKGROUND OF THE INVENTION

Hot melt adhesives are applied to a substrate while in its molten state and cooled to harden the adhesive layer. Such adhesives are widely used for various commercial and industrial applications such as product assembly and packaging, and have been widely used in the non-woven industry to make baby diapers and adult incontinence products, both as a construction adhesive and as an elastic attachment adhesive. In these applications, adhesive is applied to at least one polyolefin non-woven substrate, at least one elastic, such as spandex, and/or at least one polyolefin film to bind the substrates together.

For example, WO 02/057386 A2 discloses an adhesive composition comprising one or more styrenic block copolymers, a tackifier resin and one or more plasticizers, wherein the one or more styrenic block copolymers is of the general formula A-C-A and C is a mixed butadiene/isoprene block having a butadiene/isoprene ratio of from 30:70 to 70:30. These compositions are described as pressure sensitive adhesive compositions for adhesive tapes or sheets or for use as sealants without applying to a base material.

Since in the assembly of disposable articles a variety of materials are bonded under a wide range of conditions, separate adhesives have evolved for use in the manufacture of disposable articles. This is particularly true in elastic attachment and in laminate construction. Construction requires an adhesive with controllable, relatively low viscosity, long open time, and sufficient bonding strength to maintain the mechanical integrity of the laminate. However, to bond elastic materials to substrates, a different adhesive which exhibits high creep resistance to ensure that the elastic, when under stress, does not move relative to the surfaces of the substrates or become partially or fully detached, is used. Single adhesives having properties rendering the adhesive applicable to both lamination and elastic bonding applications are known as multipurpose adhesives.

While hot melt adhesives, including those designated as multi-purpose hot melts are conventionally used in non-woven applications, there continues to be a need for adhesives formulated to more effectively bond certain types of substrates for certain end use applications together. The current invention addresses this need.

SUMMARY OF THE INVENTION

It has been discovered that polystyrene-(polyisoprene-co-butadiene)-polystyrene block copolymers (abbreviated herein as S-I/B-S block copolymers), when used as a base polymer in a hot melt adhesive formulation, provide adhesives particularly well suited use in the manufacture of disposable articles. The S-I/B-S block copolymers have an endblock styrene content of at least 25 wt % and a diblock percentage of less than 25 %. In one embodiment the diblock percentage of the S-I/B-S block copolymer is less than 20 %. The mid-block is formed by randomly polymerized isoprene and butadiene. The adhesives are useful as elastic attachment adhesives or as an adhesive for stretchable materials such as stretchable non-woven fabrics or stretchable film laminated with another non-woven material or other type material.

The present invention is characterized by the subject-matter of claims 1 and 10.

The invention provides a hot melt adhesive according to claim 1 comprising a thermoplastic S-I/B-S block-copolymer having a styrene content of at least 25 wt % and a diblock percentage of less than 25%, a second thermoplastic elastomer and a tackifing resin, and desirably may also comprise a diluent, a wax and other conventional hot melt adhesive additives.

One embodiment of the invention is directed to an adhesive which comprises, based on the weight of the adhesive composition, from 0.5 wt % to 18 wt % of a thermoplastic S-I/B-S block copolymer, from 30 to 80 wt %, of a tackifying resin, a second different thermoplastic block copolymer in amounts of up to 30 wt %, up to 25 wt % of a liquid plasticizer, and up to 25 wt % of a wax.

In one preferred embodiment, the invention is directed to an adhesive which comprises from 5 to 18 wt % of a thermoplastic S-I/B-S block copolymer having a styrene content of at least 25 wt % and a diblock percentage of less than 25 %, from 10 to 30 wt % of a second different block copolymer, and from 30 to 70 wt % of a tackifying resin. Preferred adhesive compositions will also optionally comprise a liquid plasticizer in amounts of up to 25 wt % and a wax in amounts of up to 5 wt %. This embodiment is particularly well suited for elastic attachment applications.

In another preferred embodiment, the invention is directed to an adhesive which comprises from 0.5 to 18 wt % of a SIBS block copolymer having a styrene content of at least 25 wt % and a diblock percentage of less than 25 % and from 5 to 70 wt % of a tackifying resin. The adhesive compositions will also comprise a second different block copolymer, optionally in up to 30 wt %, and optionally a liquid plasticizer in amounts of up to 20 wt % and a wax in amounts of up to 5 wt %. This embodiment is particularly well suited for use in manufacturing flexible laminates.

In yet another preferred embodiment, the invention is directed to an adhesive which comprises from 0.5 to 18 wt % of a thermoplastic S-I/B-S block copolymer having a styrene content of at least 30 wt % and a diblock percentage of less than 25 %, from 5 to 30 wt % of a second different block copolymer, and from 30 to 70 wt % of a tackifying resin. Preferred adhesive compositions will also optionally comprise a liquid plasticizer in amounts of up to 20 wt % and a wax in amounts of up to 5 wt %.

The adhesive compositions of the invention give excellent cohesive strength when used in various applications. These adhesives exhibit good bond strength when used as a construction adhesive and exhibit good creep performance when used as an elastic attachment adhesive in the manufacture of articles comprising an elastic region, such as is found in disposable absorbent garments comprising one or more elastic cuffs positioned to contact the legs or waist of the wearer.

The invention also provides articles of manufacture comprising a hot melt adhesive comprising up to 18 wt % of a thermoplastic S-I/B-S block-copolymer having a styrene content of at least 25 wt % and a diblock percentage of less than 25%. Articles of manufacture will typically comprise at least one substrate. Encompassed by the invention are disposable absorbent articles, including disposable absorbent garments, including those comprising at least one elastic substrate or at least one stretchable material.

## DETAILED DESCRIPTION OF THE INVENTION

The present invention provides a hot melt adhesive composition comprising a block copolymer having an isoprene/butadiene midblock and a specific amount of diblock component. Specifically, the invention provides a hot melt adhesive comprising a thermoplastic S-I/B-S block-copolymer having a styrene content of at least 25 wt % and a diblock percentage of less than 25 %. The hot melt adhesives of the invention may be used as a construction adhesive to form an elastic attachment bond and to form a construction bond between a stretchable material and a second substrate, making the adhesives well-suited for use in the manufacture of non-woven disposable goods such as baby diapers, training pants and adult incontinence products.

One of the most important properties required in elastic attachment is creep performance. As such, an adhesive with excellent toughness is required. The adhesives of the invention meet the rigorous requirements needed in elastic attachment applications and other applications. The adhesives are thus particularly useful in making elastic non-wovens and in the fabrication of baby diapers, training pants, adult incontinence briefs or undergarments, and the like. Compositions of the invention are formulated for excellent bond strength with lower polymer content in the formulation, resulting in a highly effective adhesive system.

The hot melt adhesives of the invention comprise a S-I/B-S block copolymer, a second different thermoplastic elastomer, a tackifying resin, and preferably also a liquid plasticizer and, optionally, a wax. Use low levels (about 18 wt % or less) of a S-I/B-S block copolymer having a styrene content of at least 25 wt % and a diblock percentage of less than 25% in combination with a another thermoplastic block copolymer, which is different from, i.e., is not a S-I/B-S block copolymer (also referred to herein as a "second different block copolymer") provides a high performance hot melt adhesive for elastic attachment and stretchable laminates.

SIBS block copolymers for use in the practice of the invention are polystyrene-polyisoprene/polybutadiene-polystyrene (S-I/B-S) block copolymers having a styrene content of at least 25 wt % and a diblock percentage of less than 25%. The melt flow index measured using ISO 1133 method is 6-11 g/10 min (200°, 5Kg). Such polymers can be prepared as described in published U.S. patent application 2004/0167292 and are commercially available from Kraton Polymer US.

The adhesive in the present invention also comprises at least one block copolymer having the general configuration A-B-A wherein the polymer end-blocks A are non-elastomeric polymer blocks which, as homopolymers, have glass transition temperatures above 20°C, while the elastomeric polymer mid-blocks B are derived from isoprene, butadiene or isobutylene which may be hydrogenated or partially hydrogenated or mixtures thereof. These block copolymer are referred to herein for convenience and clarity as a second and different block copolymer component of the adhesive of the invention. Such polymers include linear, radial and star block copolymers.

The non-elastomeric end-blocks A may comprise homopolymers or copolymers of vinyl monomers such as vinyl arenes, vinyl pyridines, vinyl halides and vinyl carboxylates, as well as acrylic monomers such as acrylonitrile, methacrylonitrile, esters of acrylic acids, etc. Monovinyl aromatic hydrocarbons include particularly those of the benzene series such as styrene, vinyl toluene, vinyl xylene, and ethyl vinyl benzene as well as dicyclic monovinyl compounds such as vinyl naphthalene and the like. Other non-elastomeric polymer blocks may be derived from alpha olefins, alkylene oxides, acetals, urethanes, etc. Styrene is preferred.

The elastomeric mid-block B component making up the remainder of the thermoplastic elastomeric copolymer is derived from isoprene or butadiene which may be hydrogenated as taught, for example, in U.S. Patent No. 3,700,633. This hydrogenation of butadiene may be either partially or substantially complete. Selected conditions may be employed for example to hydrogenate the elastomeric butadiene block while not so modifying the vinyl arene polymer blocks. Other conditions may be chosen to hydrogenate substantially uniformly along the polymer chain, both the elastomeric and non-elastomeric blocks thereof being hydrogenated to practically the same extent, which may be either partial or substantially complete. Hydrogenated polymers are preferred to minimize degradation during processing, which is a more severe problem with higher molecular weight polymers.

The adhesive compositions of the invention will typically comprise up to 30 wt % of the A-B-A block copolymer, more typically up to 20 wt %. Examples include styrene-isoprene-styrene (SIS), styrene-butadiene-styrene (SBS), styrene-isobutylene styrene (SIBS), styrene-b-ethylene/butylene-b-stryrene (SEBS), and/or styrene-b-ethylene/propylene-b-styrene (SEPS).

The total amount of block copolymer, S-I/B-S and ABA block copolymers, in the adhesive composition will generally be at least 13 wt % or more.

The adhesives of the invention will typically also comprise a tackifying resin which is compatible with the midblock of the thermoplastic elastomer. Typically, the tackifying resin will be present in amounts of from 5 to 70 wt %. In formulations for use in laminating a stretchable material to another substrate, the tackifying resin will typically be present in amounts of from 30 to 70 wt %. Preferred are tackifying resin having a Ring and Ball softening point above about 25°C. Suitable tackifying resin include any compatible resins or mixtures thereof such as (1) natural or modified rosins such, for example, as gum rosin, wood rosin, tall-oil rosin, distilled rosin, hydrogenated rosin, dimerized rosin, and polymerized rosin; (2) glycerol and pentaerythritol esters of natural or modified rosins, such, for example as the glycerol ester of pale, wood rosin, the glycerol ester of hydrogenated rosin, the glycerol ester of polymerized rosin, the pentaerythritol ester of hydrogenated rosin, and the phenolic-modified pentaerythritol ester of rosin; (3) copolymers and terpolymers of natural terpenes, e.g., styrene/terpene and alpha methyl styrene/terpene; (4) polyterpene resins having a softening point, as determined by ASTM method E28,58T, of from 80° to 150°C; the latter polyterpene resins generally resulting from the polymerization of terpene hydrocarbons, such as the bicyclic monoterpene known as pinene, in the presence of Friedel-Crafts catalysts at moderately low temperatures; also included are the hydrogenated polyterpene resins; (5) phenolic modified terpene resins and hydrogenated derivatives thereof, for example, as the resin product resulting from the condensation, in an acidic medium, of a bicyclic terpene and phenol; (6) aliphatic petroleum hydrocarbon resins having a Ball and Ring softening point of from 70° to 135°C; the latter resins resulting from the polymerization of monomers consisting of primarily of olefins and diolefins; also included are the hydrogenated aliphatic petroleum hydrocarbon resins; (7) alicyclic petroleum hydrocarbon resins and the hydrogenated derivatives thereof; and (8) aliphatic/aromatic or cycloaliphatic/aromatic copolymers and their hydrogenated derivatives.

Preferred tackifying resin for use herein include polyterpenes, aliphatic resins, cycloaliphatic resins, and aliphatic/aromatic or cycloaliphatic/aromatic. More preferred are the aliphatic and cycloaliphatic resins. Examples include Wingtack 95 from Goodyear, Eastotac H100R from Eastman Chemical Company and ESCOREZ 5600 from ExxonMobil Chemical Company. The desirability and selection of the particular tackifying agent can depend upon the specific elastomeric block copolymer employed.

Additionally, it may be desirable to incorporate in the adhesive up to 30 wt % of an end block tackifier resin. End block resins reside predominantly in the non-elastomer blocks of the thermoplastic elastomer after the adhesive is cooled. Representative of such resins are the primarily aromatic resins based on mixed C9 petroleum distillation streams such as materials available from Eastman Chemical Company, or resins based on pure or mixed monomer streams of aromatic monomers such as homo or copolymers of vinyl toluene, styrene, alpha-methyl styrene, coumarone or indene. Preferred are those based on alpha-methyl styrene available from Eastman Chemical Company under the Kristalex and Plastolyn trade names. If present, the end block resin is generally used in an amount of 1 to 30 wt %, preferably less than 20 wt %.

Preferred adhesive compositions will typically contain from 30 to 80 wt % of a tackifying resin which is compatible with the mid-block of the block copolymers and from 5 to 30 wt % of a thermoplastic hydrocarbon tackifier which is compatible with the end-block of the block copolymers.

There may also be present in the adhesive an oil or other liquid diluent which is primarily aliphatic in character and is compatible with the thermoplastic elastomer midblock. The compositions of the invention will typically comprise the liquid plasticizer in amounts of less than 25 wt %. Compositions of the invention will generally comprise at least 1 wt %, more typically at least 5 wt % of a liquid plasticizer. Examples include plasticizers such as paraffinic and naphthenic petroleum oils, highly refined aromatic-free paraffinic and naphthenic food and technical grade white petroleum mineral oils, and liquid tackifiers such as the synthetic liquid oligomers of polybutene, polypropene, polyterpene, etc. The synthetic series process oils are high viscosity oligomers which are permanently fluid liquid monolefins, isoparaffins or paraffins of moderate to high molecular weight. Liquid plasticizing or tackifying diluents include polyterpenes such as Wingtack 10 available from Goodyear, and Escorez 2520 based on a C5 feed stream available from Exxon Chemical. Other liquid diluents include polyisoprene, available as LIR 50 from Kuraray, and Amoco's polybutenes available under the name Indopol. Most preferred are paraffinic oils in combination with Escorez 2520, a polymerized C5 petroleum feed stream.

Also, optionally, there may be present up to 5 wt % of a wax such as the polyethylene waxes. If used, the wax is generally present in an amount of at least about 2 wt %.

Antioxidants typically used in the production of rubber based pressure sensitive adhesives may be present in an amount of up to 3 wt %. Among the useful stabilizers or antioxidants utilized herein are included high molecular weight hindered phenols and multifunctional phenols such as sulfur and phosphorous-containing phenols. Hindered phenols are well known to those skilled in the art and may be characterized as phenolic compounds which also contain sterically bulky radicals in close proximity to the phenolic hydroxyl group thereof. In particular, tertiary butyl groups generally are substituted onto the benzene ring in at least one of the ortho positions relative to the phenolic hydroxy group. Representative hindered phenols include: 1,3,5-trimethyl 2,4,6-tris (3,5-di-tert-butyl-4- hydroxybenzyl) benzene; pentaerythrityl tetrakis-3(3,5-di-tert-butyl-4-hydroxypheny1)-propionate; 4,4'-methylenebis(2,6-tert-butylphenol); 4,4'-thiobis(6-tert-butyl-o-cresol); 2,6-di-tert-butylphenol; 6-(4-hydroxyphenoxy)-2,4-bis(n-octylthio)-1 ,2,5-triazine; di-n-octadecy13,5-di-tert-butyl-4-hydroxybenzyl phosphonate; 2-(n-octylthio)ethyl 3,5-di-tert-butyl-4-hydroxybenzoate; and sorbitol hexa[3-(3,5-di-tert-butyl-4-hydroxypheny1)-propionate].

Adhesives of the invention will comprise up to 18 wt % of a S-I/B-S block copolymer having a styrene content of at least 25 wt % and a diblock percentage of less than 25 %, another different block copolymer such as but not limited to linear block copolymers selected from SIS, SBS, SEBS, SEPS, SIBS, and combinations thereof, a tackifying resin and, optionally, a liquid plasticizer, a wax, or combination thereof. Based on the weight of the adhesive composition, the SIBS block copolymer is typically present in amounts of from 0.5 wt % to 18 wt %, the other block polymer will typically be present in amounts of up to 20 wt %, and the tackifying resin is typically present in amounts of from 30 to 80 wt %. The adhesives may optionally also comprise a plasticizer in amounts of up to 25 wt % and a wax in amounts up to 5 wt %.

One embodiment is particularly well suited for use as a construction adhesive for articles, such as e.g., baby diapers or adult incontinent articles, that comprises a stretchable material as a substrate. The construction adhesive comprises from 10 to 18 wt % of a SIBS block copolymer having a styrene content of at least 25 wt % and a diblock percentage of less than 25 %, from 5 to 20 wt % of another block copolymer such as SIS, SBS, SEBS, SEPS, SIBS, and combinations thereof, from 30 to 70 wt % of a tackifying resin, 0 to 25 wt % of a liquid plasticizer and 0 to 5 wt % of a wax.

Another embodiment is particularly well-suited for use as an elastic attachment adhesive for disposable articles. The elastic attachment adhesive comprises from 0.5 to 18 wt % of a SIBS block copolymer having a styrene content of at least 25 wt % and a diblock percentage of less than 25%, another block copolymer such as SBS, SEBS, SEPS, SIBS, and combinations thereof in amounts up to 20 wt %, from 5 to 70 wt % of a tackifying resin, 0 to 20 wt % of a liquid plasticizer and 0 to 5 wt % of a wax.

Yet another embodiment is directed to an adhesive which comprises from 0.5 to 18 wt % of a S-I/B-S block copolymer having a styrene content of at least 25 wt % and a diblock percentage of less than 25 %, from 5 to 20 wt % of another block copolymer such as SBS, SEBS, SEPS, SIBS, and combinations thereof, from 30 to 70 wt % of a tackifying resin, 0 to 20 wt % of a liquid plasticizer and 0 to 5 wt % of a wax.

The hot melt adhesive compositions of the invention may be formulated using techniques known in the art. An exemplary procedure involves placing approximately 20% of the oil or liquid diluent with all the thermoplastic polymers, and stabilizers in a jacketed mixing kettle, preferably in a jacketed heavy duty mixer, which is equipped with rotors and thereupon raising the temperature to about 190°C. After the mixture has been melted, the temperature is lowered to 150° to 165°C. Mixing and heating are continued until a smooth, homogeneous mass is obtained whereupon tackifying resin, wax, and the remainder of the diluent are thoroughly and uniformly admixed therewith.

The adhesive may be applied to a desired substrate by any method known in the art, and include, without limitation roll coating, painting, dry-brushing, dip coating spraying, slot-coating, swirl spraying, printing (e.g., ink jet printing), flexographic, extrusion, atomized spraying, gravure (pattern wheel transfer), electrostatic, vapor deposition, fiberization and/or screen printing.

The adhesive of the invention are useful as positioning adhesives, core adhesives or elastic adhesives, the lamination of a stretchable material to another substrate, which may or may not be a non-woven substrate, and are particularly suitable for use in the manufacture of articles, including but not limited to disposable absorbent products, such as diapers, adult incontinent products, bed pads; sanitary napkins, and in other absorbent products, such as, bibs, wound dressings, and surgical capes or drapes, which are used to absorb a liquid, such as water and saline, and body liquids, such as urine, menses, and blood. The adhesive may be used to adhere the nonwoven or tissue to another substrate or component. The second substrate may be another nonwoven, tissue, or an unrelated material. The adhesive of the invention will typically be applied to the substrate at temperatures of from 143°C (290°F) to 163°C (325°F).

As described above, an absorbent structure will typically comprise a nonwoven fabric. A nonwoven fabric is defined as an interlocking fiber network characterized by flexibility, porosity and integrity. The individual fibers used to compose the nonwoven fabric may be synthetic, naturally occurring, or a combination of the two. The individual fibers may be mechanically, chemically, or thermally bonded to each other. Nonwovens are used commercially for a variety of applications including insulation, packaging (e.g., foods such as meat), household wipes, surgical drapes, medical dressings, and in disposable articles such as diapers, adult incontinent products and sanitary napkins. Tissue is a closely related material in which the individual fibers may or may not be chemically bonded to one another.

The adhesive may be used to attach the topsheet to the backsheet. Alternatively, the adhesive may be used to adhere either the topsheet or the backsheet to other components of the disposable absorbent product, such as tissue layers, leg flaps, fastening ears, tapes, or tabs, or other components typically used to construct a disposable absorbent product that are well known to one skilled in the art.

Those skilled in the art will recognize materials suitable for use as the topsheet and backsheet. Exemplary of materials suitable for use as the topsheet are liquid-permeable materials, such as spunbonded polypropylene or polyethylene having a basis weight of from 15 to 25 grams per square meter. Backsheets often used in disposable absorbent products are generally prepared from liquid-impermeable materials which function to contain liquids, such as water, urine, menses, or blood, within the absorbent core of the disposable absorbent product and to protect bedding and/or a wears'outer garments from soiling. Materials useful as a backsheet in a disposable absorbent product are generally impermeable to liquid but are permeable to vapor. Examples are liquid-impervious materials such as polyolef in films, e.g., polypropylene and polyethylene, as well as vapor-pervious materials, such as microporous polyolefin films, sometimes referred to as breathable films.

The adhesive of the invention is particularly useful as an elastic attachment adhesive. Materials with excellent stretchability and elasticity are needed to manufacture a variety of disposal and durable articles such as, for example, incontinence pads, disposable diapers, training pants, clothing, undergarments, sports apparel, automotive trim, weather-stripping, gaskets, and furniture upholstery. Stretchability and elasticity are performance attributes that can, for example, function to effectuate a closely conforming fit to the body of a wearer or to the frame of an item. While numerous materials are known to exhibit excellent stress-strain properties and elasticity at room temperatures, it is often desirable for elastic materials to provide a conforming or secure fit during repeated use, extensions and retractions at elevated temperatures such as at body temperatures or in automobile interiors during summer months. The adhesives find particular use as elastic attachment adhesive for use in non-woven applications such as baby diaper or adult incontinence items. In addition to the non-woven markets, the hot melt adhesives of the invention are useful in the packaging, converting and bookbinding markets where the desire is to reduce application temperature and, at the same time, keep the toughness and strength of the adhesive.

Disposable elastic articles are typically composite materials prepared from polymer films, elastomeric fibers, nonwoven sheets and/or absorbent materials by a combination of fabrication technologies. Elastomeric fibers can be prepared by well known processes such as melt- and solution-spinning and winding. Nonwoven sheets can be prepared by spun bonding, melt blowing, hydroentangling, mechanical entangling and the like. Film and sheet forming processes typically involve known extrusion and coextrusion techniques, e.g., blown film, cast film, profile extrusion, injection molding, extrusion coating, and extrusion sheeting. Polymer films are preferably liquid-impervious materials such as polyolefin films, e.g., polypropylene and polyethylene, as well as vapor-pervious materials, such as microporous polyolefin films, sometimes referred to as breathable films.

Durable elastic articles such as, for example, automotive door and window trim, clothing waist-band threads or strips, and building weather-stripping can be made by well-known molding, thermoforming and profile extrusion technologies.

A material is typically considered elastomeric when it is characterized as having a high percent elastic recovery (i.e., a low percent permanent set) after application of a biasing force. Ideally, elastic materials are characterized by a combination of three, temperature independent properties, i.e., a low percent permanent set, a low stress or load at strain, and a low percent$_{stress}$ or load relaxation. That is, there should be at low to elevated service temperatures (1) a low stress or load requirement to stretch the material, (2) no or low relaxing of the stress or unloading while the material is stretched, and (3) complete or high recovery to original dimensions after the stretching, biasing or straining is discontinued. Thus, an elastomeric polymer is typically a polymer which, free of diluents, has a break elongation in excess of 100% independent of any crimp (when in fiber form) and which when stretched to twice its length, held

for one minute, and then released, retracts to less than 1.5 times its original length within one minute of being released. Such polymers include, but are not limited to, natural rubber or synthetic rubbers, segmented polyurethanes (including polyurethaneureas) such as polyetherurethanes and polyesterurethanes, polyetheresters, elastomeric polyethylenes and polypropylenes, and polyetheramides. The article of the invention can comprise substrates comprising such elastomeric polymers in various forms, and such substrates can be used in the process of the invention, provided the benefits of the invention are not adversely affected. The articles of manufacture of the invention can comprise the adhesive and at least one elastomeric substrate such as at least one elastomeric fiber, tape, film, strip, coating, ribbon and/or sheet, and, include substantially linear ethylene polymers and elastomeric substrates such as, for example, spandex (e.g., Lycra® spandex and Lycra® XA, a spandex having little or no lubricating finish thereon). In one embodiment, the substrate comprises spandex or melt spun elastomers. In another embodiment the substrate comprises natural or synthetic rubbers in the form of fibers or in the form of strips less than about 10 mm wide. The adhesive and at least one elastomeric substrate may comprise at least one component of an article of manufacture. Not limiting examples of such components include waistbands, leg bands, bellybands, etc.

The U.S. International Trade Commission defines spandex as a manufactured fiber in which the fiber-forming substance is a long-chain synthetic polymer comprised of at least 85 percent by weight of a segmented polyurethane. Lycra® spandex is known to exhibit nearly ideal, temperature independent elastic properties rendering it very suitable for use in garments, sports apparel and swimsuits.

Adhesive embodiments of the invention may be used as construction adhesives to prepare stretchable materials such as multilayer elastomeric laminates comprising at least one elastomeric polymeric layer and at least one other layer. Such laminates are described in, for example, U.S. Patents 5,462,708, 5,733,628 and 6,312,786.

The invention is further illustrated by the following non-limiting example.

EXAMPLE

In the following example, all parts are by weight and all temperatures in degrees Fahrenheit unless otherwise noted.

**Adhesive preparation.** The formulations described herein were prepared in a 600 g Brabender mixer with sigma blades. The thermoplastic block copolymers and about 20% of the oil in the formulation were added to the bowl preheated to about 163°C (325°F). Once homogenous, mid-block tackifier was added. Finally additional oil and the end block tackifier were added. The blending process ended when the mixture was homogeneous.

The following materials were used to prepare the adhesives:

Kraton MD 6460, available from Kraton Polymers U.S., is a block copolymer with 30% styrene as the end block, and 70% of isoprene and butadiene random copolymer as the mid block. The melt flow index of MD 6460 is 6-11 g/10min. following the IS01133 method. The di-block percentage of this polymer is about 30%.

Kraton 1162, available from Kraton Polymer US., is a SIS block-copolymer. The styrene content is about 44%, the MFI of 35 following the ISO 1133 method. The di-block percentage is about 0%.

Plastolyn 240, available from Eastman Chemical Company, is an alpha-methyl styrene end block tackifying resin.

Escorez 5400 is a petroleum hydrocarbon resin obtained from Exxon, which has a softening point of about 100°C.

Calsol 5550, available from Calumet Lubricants Company, is a mineral oil.

IRGANOX 1010FF, available from Ciba-Geigy, is an antioxidant.

The non-woven substrate used in the examples was a spunbond polypropylene manufactured by Avgol.

The polyethylene film used in the example was a corona treated TXEM-244.0 embossed film with thickness of 19 μm (0.75mil), manufactured by Pliant Corp.

The adhesives were then subjected to various tests simulating the properties needed for successful commercial applications. These tests are detailed below.

**Melt viscosities** of the hot melt adhesives were determined on a Brookfield Model RVT Thermosel viscometer using a number 27 spindle.

**Tensile performance** of the hot melt adhesives was determined on 3.2 mm(0.125") thick, 6.4 cm(2.5") long dogbone shaped portions with 2.54 cm x 2.54 cm (1" X 1") end tabs and a 1.27 cm x 1.27 cm (0.5" X 0.5") central gage portion. These were pulled on an Instron with pneumatic grips at a speed of 30.5 cm (12")/min. The breaking stress and the yield stress of the adhesives were then recorded.

**Mechanical dynamic performance** of the hot melt adhesive was determined by a Rheometrics Dynamic Mechanical Analyzer (Model RDA 700) to obtain the elastic (G')and loss (G") moduli versus temperature. The instrument was controlled by Rhios software version 4.3.2. Parallel plates 8 mm in diameter and separated by a gap of about 2 mm were used. The sample was loaded and then cooled to about -100°C, and the time program started. The program test increased the temperature at 5°C intervals followed by a soak time at each temperature of 10 seconds. The convection oven containing the sample was flushed continuously with nitrogen. The frequency was maintained at 10 rad/s. The initial strain at the start of the test was 0.05% (at the outer edge of the plates). An autostrain option in the software was used to maintain an accurately measurable torque throughout the test. The option was configured such that the maximum applied strain allowed by the software was 80%. The autostrain program adjusted the strain at each temperature increment if warranted using the following procedure. If the torque was below 200 g-cm the strain was increased by 25% of the current value. If the torque was above 1200 g-cm it was decreased by 25% of the current value. At torques between 200 and 1200 g-cm no change in strain was made at that temperature increment. The shear storage or elastic modulus (G')and the shear loss modulus (G") were calculated by the software from the torque and strain data. Their ratio, $G''/G1$, also known as the tan delta, was also calculated. The mid-block Tg was taken as the maximum in tan delta. The cross-over temperature is the temperature at which G' and G" are equal to each other.

**Creep performance** was evaluated by measuring how much a free-end elastic strand retracts under the stretched condition at end-use temperature (38°C (100°F)) during a 4-hour period. The length of a filament (spandex) adhered in the stretched condition between two nonwoven sheets or a nonwoven sheet and a polymeric film was measured ("starting length"). The nonwoven/film and both ends of the spandex were cut and the amount that the resulting free-end filament retracts was measured following a 4 hour period at 38°C (100°F). The percent creep was then calculated in the following manner:

$$\%creep = \frac{starting\ length - final\ length}{starting\ length} \times 100$$

For example, if the initial distance between marks was 20cm and the final distance between the marks was 15 cm, the percent creep is 25%. Five samples for each condition were tested and the results averaged for each elastic strand and result recorded.

Example 1 (Reference)

An adhesive sample having the formulation shown in Table 1 was made as described above. This example shows that using less than 15% of S-I/B-S in combination with another block copolymer generates good creep performance for an elastic attachment adhesive. The adhesive applicator used was the Nordson Spiral spray process. Three decitex 620 Lycra Spandex fiber were used to adhere to a poly and non-woven substrate. The continuous, non-wrapped pattern was used during the adhesive application. The add-on level is 8mg/in for three strands. Creep performance and other performance properties are also shown in Table 1.

Table 1

|  | Sample |
|---|---|
| Kraton MD 6460 | 13 |
| Kraton 1162 | 7 |
| Plastolyn 240 | 10.0 |
| Escorez 5400 | 54.0 |
| Calsol 5550 | 16.0 |
| Irgonox 1010 | 0.5 |
| Creep Performance | 12.3% |
| G'at 40°C (dyne/cm2) | $2.6 \times 10^5$ |
| Tg (°C) | 21.0 |
| Cross-over Temp (°C) | 82.4 |
| Ultimate Tensile (psi) | 191.5 |
| Yield stress (psi) | 24.3 |
| Viscosity (cp, temp °F)) | 5050 (300) |

**Claims**

1. A hot melt adhesive comprising a polystyrene-(polyisoprene-co-butadiene)-polystyrene block copolymer having a styrene content of at least 25 wt % and a di-block percentage of less than 25 %, a second block copolymer which is not a polystyrene-(polyisoprene-co-butadiene)-polystyrene block copolymer, a tackifying resin and optionally a liquid plasticiser, a wax or a combination thereof, wherein said polystyrene-(polyisoprene-co-butadiene)-polystyrene block copolymer is present in amounts of up to 18 wt % based on the weight of the adhesive composition and wherein said second block copolymer has the configuration A-B-A wherein the polymer end-blocks A are non-elastomeric polymer blocks which, as homopolymers, have glass transition temperatures above 20°C, while the elastomeric polymer mid-blocks B are derived from isoprene, butadiene or isobutylene which may be hydrogenated or partially hydrogenated or mixtures thereof.

2. The adhesive of claim 1 wherein the polystyrene-(polyisoprene-co-butadiene)-polystyrene block copolymer has a di-block percentage of less than 20 %.

3. The adhesive of claim 1 comprising, based on the weight of the adhesive composition, from 0.5 wt % to 18 wt % of said polystyrene-(polyisoprene-co-butadiene)-polystyrene block copolymer, up to 30 wt % of said second block copolymer, from 30 to 80 wt % of a tackifying resin, and optionally up to 25 wt % of a liquid plasticizer, and up to 25 wt % of a wax.

4. The adhesive of claim 3 comprising 5 to 18 wt % of said polystyrene-(polyisoprene-co-butadiene)-polystyrene block copolymer, from 10 to 20 wt % of said second block copolymer, from 30 to 70 wt % of a tackifying resin, 0 to 25 wt % of a liquid plasticizer and 0 to 5 wt % of a wax.

5. The adhesive of claim 1 comprising from 0.5 to 18 wt % of said styrene-polyisoprene-co-butadiene-styrene block copolymer, up to 30 wt % of said second block copolymer, from 5 to 70 wt % of a tackifying resin, 0 to 20 wt % of a liquid plasticizer and 0 to about 5 wt % of a wax.

6. The adhesive of claim 1 comprising from 0.5 to 18 wt % of said polystyrene-(polyisoprene-co-butadiene)-polystyrene block copolymer, from 5 to 20 wt % of said second block copolymer, from 30 to 70 wt % of a tackifying resin, 0 to 20 wt % of a liquid plasticizer and 0 to 5 wt % of a wax.

7. The adhesive of claim 1 wherein said second block copolymer is selected from the group consisting of styrene-isoprene-styrene, styrene-butadiene-styrene, styrene-isobutylene styrene, styrene-b-ethylene/butylene-b-stryrene, styrene-b-ethylene/propylene-b-styrene or a combination thereof.

**8.** The adhesive of claim 7 wherein the second block copolymer is styrene-butadiene-styrene.

**9.** The adhesives of claim 1 which comprises both a liquid plasticizer and a wax.

**10.** An article of manufacture comprising the adhesive of claim 1.

**11.** The article of claim 10 comprising an elastomeric fiber or other stretchable material.

**12.** The article of claim 10 comprising an elastomeric fiber.

**13.** The article of claim 11 which is a disposable absorbent article.

**14.** The article of claim 13 which is a disposable elastic article.

**15.** The article of claim 10 which is a stretchable laminate.

**16.** The article of claim 13 which is a diaper.

**Patentansprüche**

**1.** Heißschmelzklebstoff, umfassend ein Polystyrol-(Polyisopren-Co-Butadien)-Polystyrol-Blockcopolymer mit einem Styrol-Gehalt von mindestens 25 Gew.-% und einem prozentualen Diblock-Anteil von weniger als 25%; ein zweites Blockcopolymer, das kein Polystyrol-(Polyisopren-Co-Butadien)-Polystyrol-Blockcopolymer ist, ein Klebharz und wahlweise ein flüssiger Weichmacher, ein Wachs oder eine Kombination davon, wobei das Polystyrol-(Polyisopren-Co-Butadien)-Polystyrol-Blockcopolymer bezogen auf das Gewicht der Klebstoffzusammensetzung in einer Menge von bis zu 18 Gew.-% vorliegt und wobei das zweite Blockcopolymer die Konfiguration A-B-A aufweist, worin die Polymer-Endblöcke A nichtelastomere Polymerblöcke sind, die als HomoPolymere Glasübergangstemperaturen oberhalb von 20 °C aufweisen, während die elastomeren Polymer-Mittelblöcke von Isopren, Butadien oder Isobutylen deriviert sind, die hydriert oder teilweise hydriert oder Mischungen davon sein können.

**2.** Klebstoff nach Anspruch 1, wobei das Polystyrol-(Polyisopren-Co-Butadien)-Polystyrol-Blockcopolymer einen prozentualen Diblock-Anteil von weniger als 20 % aufweist.

**3.** Klebstoff nach Anspruch 1, umfassend bezogen auf das Gewicht der Klebzusammensetzung von 0,5 Gew.-% bis 18 Gew.-% des Polystyrol-(Polyisopren-Co-Butadien)-Polystyrol-Blockcopolymers, bis zu 30 Gew.-% des zweiten Blockcopolymers, von 30 bis 80 Gew.-% eines Klebharzes und wahlweise bis zu 25 Gew.-% eines flüssigen Weichmachers und bis zu 25 Gew.-% eines Wachses.

**4.** Klebstoff nach Anspruch 1, umfassend 5 bis 18 Gew.-% des Polystyrol-(Polyisopren-Co-Butadien)-Polystyrol-Blockcopolymers, von 10 bis 20 Gew.-% des zweiten Blockcopolymers, von 30 bis 70 Gew.-% eines Klebharzes und 0 bis 25 Gew.-% eines flüssigen Weichmachers und bis zu 0 bis 5 Gew.-% eines Wachses.

**5.** Klebstoff nach Anspruch 1, umfassend von 0,5 bis 18 Gew.-% des Polystyrol-(Polyisopren-Co-Butadien)-Polystyrol-Blockcopolymers, bis zu 30 Gew.-% des zweiten Blockcopolymers, von 5 bis 70 Gew.-% eines Klebharzes, 0 bis 20 Gew.-% eines flüssigen Weichmachers und 0 bis etwa 5 Gew.-% eines Wachses.

**6.** Klebstoff nach Anspruch 1, umfassend von 0,5 bis 18 Gew.-% des Polystyrol-(Polyisopren-Co-Butadien)-Polystyrol-Blockcopolymers, von 5 bis 20 Gew.-% des zweiten Blockcopolymers, von 30 bis 70 Gew.-% eines Klebharzes, 0 bis 20 Gew.-% eines flüssigen Weichmachers und 0 bis 5 Gew.-% eines Wachses.

**7.** Klebstoff nach Anspruch 1, wobei das zweite Blockcopolymer ausgewählt ist aus der Gruppe bestehend aus Styrol-Isopren-Styrol, Styrol-Butadien-Styrol, Styrol-Isobutylen-Styrol, Styrol-b-Ethylen / Butylen-b-Styrol, Styrol-b-Ethylen / Propylen-b-Styrol oder eine Kombination davon.

**8.** Klebstoff nach Anspruch 7, wobei das zweite Blockcopolymer Styrol-Butadien-Styrol ist.

**9.** Klebstoffe nach Anspruch 1, die sowohl einen flüssigen Weichmacher als auch ein Wachs aufweisen.

**10.** Gebrauchprodukt, umfassend den Klebstoff nach Anspruch 1.

**11.** Produkt nach Anspruch 10, umfassend eine elastomere Faser oder anderes streckbares Material.

**12.** Produkt nach Anspruch 10, umfassend eine elastomere Faser.

**13.** Produkt nach Anspruch 11, das ein wegwerfbarer absorbierender Artikel ist.

**14.** Produkt nach Anspruch 13, das ein wegwerfbarer elastischer Artikel ist.

**15.** Produkt nach Anspruch 10, das ein streckbares Laminat ist.

**16.** Produkt nach Anspruch 13, das eine Windel ist.

## Revendications

**1.** Adhésif thermofusible comprenant un copolymère séquencé polystyrène-(polyisoprène-co-butadiène)-polystyrène ayant une teneur en styrène d'au moins 25 % en poids et un pourcentage de bi-séquence inférieur à 25 %, un second copolymère séquencé qui n'est pas un copolymère séquencé polystyrène-(polyisoprène-co-butadiène)-polystyrène, une résine tackifiante et éventuellement un plastifiant liquide, une cire ou une combinaison de ceux-ci, ledit copolymère séquencé polystyrène-(polyisoprène-co-butadiène)-polystyrène étant présent en quantités allant jusqu'à 18 % en poids par rapport au poids de la composition adhésive et ledit second copolymère séquencé ayant la configuration A-B-A, où les séquences polymères terminales A sont des séquences polymères non élastomères qui, en tant qu'homopolymères, présentent des températures de transition vitreuse supérieures à 20°C, alors que les séquences intermédiaires polymères élastomères B sont dérivées d'isoprène, de butadiène ou d'isobutylène, qui peuvent être hydrogénés ou partiellement hydrogénés, ou de mélanges de ceux-ci.

**2.** Adhésif selon la revendication 1 dans lequel le copolymère séquencé polystyrène-(polyisoprène-co-butadiène)-polystyrène présente un pourcentage de bi-séquence inférieur à 20 %.

**3.** Adhésif selon la revendication 1 comprenant, en fonction du poids de la composition adhésive, de 0,5 % en poids à 18 % en poids dudit copolymère séquencé polystyrène-(polyisoprène-co-butadiène)-polystyrène, jusqu'à 30 % en poids dudit second copolymère séquencé, de 30 à 80 % en poids d'une résine tackifiante et éventuellement jusqu'à 25 % en poids d'un plastifiant liquide et jusqu'à 25 % en poids d'une cire.

**4.** Adhésif selon la revendication 3 comprenant de 5 à 18 % en poids dudit copolymère séquencé polystyrène-(polyisoprène-co-butadiène)-polystyrène, de 10 à 20 % en poids dudit second copolymère séquencé, de 30 à 70 % en poids d'une résine tackifiante, de 0 à 25 % en poids d'un plastifiant liquide et de 0 à 5 % en poids d'une cire.

**5.** Adhésif selon la revendication 1 comprenant de 0,5 à 18 % en poids dudit copolymère séquencé styrène-polyisoprène-co-butadiène-styrène, jusqu'à 30 % en poids dudit second copolymère séquencé, de 5 à 70 % en poids d'une résine tackifiante, de 0 à 20 % en poids d'un plastifiant liquide et de 0 à environ 5 % en poids d'une cire.

**6.** Adhésif selon la revendication 1 comprenant de 0,5 à 18 % en poids dudit copolymère séquencé polystyrène-(polyisoprène-co-butadiène)-polystyrène, de 5 à 20 % en poids dudit second copolymère séquencé, de 30 à 70 % en poids d'une résine tackifiante, de 0 à 20 % en poids d'un plastifiant liquide et de 0 à 5 % en poids d'une cire.

**7.** Adhésif selon la revendication 1 dans lequel ledit second copolymère séquencé est choisi dans le groupe constitué de styrène-isoprène-styrène, de styrène-butadiène-styrène, de styrène-isobutylène-styrène, de styrène-b-éthylène/butylène-b-styrène, de styrène-b-éthylène/propylène-b-styrène ou d'une combinaison de ceux-ci.

**8.** Adhésif selon la revendication 7 dans lequel le second copolymère séquencé est le styrène-butadiène-styrène.

**9.** Adhésifs selon la revendication 1 qui comprennent un plastifiant liquide et une cire.

**10.** Article manufacturé comprenant l'adhésif selon la revendication 1.

**11.** Article selon la revendication 10 comprenant une fibre élastomère ou un autre matériau extensible.

**12.** Article selon la revendication 10 comprenant une fibre élastomère.

**13.** Article selon la revendication 11 qui est un article absorbant jetable.

**14.** Article selon la revendication 13 qui est un article élastique jetable.

**15.** Article selon la revendication 10 qui est un stratifié extensible.

**16.** Article selon la revendication 13 qui est une couche-culotte.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02057386 A2
- US 20040167292 A
- US 3700633 A
- US 5462708 A
- US 5733628 A
- US 6312786 B